# EUROPÄISCHE PATENTANMELDUNG

(11) **EP 0 919 760 A2**
(43) Veröffentlichungstag der Anmeldung: **02.06.1999**
(21) Anmeldenummer: 98121964.5
(22) Anmeldetag: 19.11.1998
(51) Int. Cl.: F16L 37/12

(54) **Vorrichtung zum Verbinden von zwei rohrförmigen Leitungsteilen**

(30) Priorität: 26.11.1997 DE 19752280
(71) Anmelder: DaimlerChrysler AG, 70567 Stuttgart (DE); LEISTRITZ AG & CO. Abgastechnik, D-90765 Fürth (DE); Firma Muhr und Bender, 57439 Attendorn (DE)
(72) Erfinder: Gensert, Heiko, 65817 Eppstein (DE); Peters, Arndt Dr., 71384 Weinstadt (DE); Schneider, Horst, 73108 Gammelshausen (DE); Wierzba, Helmut, 91126 Schwabach (DE); Scharioth, Rüdiger, 57439 Attendorn (DE)

(57) **Zusammenfassung**

Es ist eine Vorrichtung zum Verbinden von zwei rohrförmigen Leitungsteilen (1,2) vorgesehen. Zwischen den Leitungsteilen (1,2) ist eine Dichtungseinrichtung (3) angeordnet. Die Leitungsteile (1,2) weisen an ihren Enden jeweils ein flanschartiges Endstück (1a,2a) auf. Die Leitungsteile (1,2) sind von einer Federeinrichtung, die ein sich rechtwinkelig zur Längsachse (9) der Leitungsteile (1,2) erstreckendes Mittelteil (5) aufweist, mit einer Vorspannkraft zusammengehalten. Die Federeinrichtung weist ein Federelement (4) auf, von dessen sich rechtwinkelig zu den Längsachsen (9) der Leitungsteile (1,2) von den Querseiten des Mittelteiles (5) aus Federäste (6,7) erstrecken. Unter Bildung einer wenigstens annähernden U-Form erstrecken sich die Federäste (6,7) wenigstens teilweise über den Außenumfang der Leitungsteile (1,2), wobei die Federäste (6,7) jeweils eine an die Außendurchmesser der Leitungsteile (1,2) angepaßte mittige Aussparung (8) aufweisen, in welcher jeweils ein Leitungsteil (1,2) im montierten Zustand des Federelementes (4) aufgenommen ist.

## Beschreibung

Die Erfindung betrifft eine Vorrichtung zum Verbinden von zwei rohrförmigen Leitungsteilen nach der im Oberbegriff von Anspruch 1 näher definierten Art.

In der DE 44 44 550 A1 ist eine gattungsgemäße Vorrichtung zur Verbindung von zwei rohrförmigen Leitungsteilen beschrieben, wobei die Anschlußstücke durch Federmittel mit einer Vorspannkraft zusammengehalten sind. Die Federmittel weisen eine sich an einem Anschlußstück abstützende Scheibenfeder und eine weitere mit dem jeweils anderen Anschlußstück in Wirkverbindung stehende Scheibenfeder auf, wobei die beiden Scheibenfedern durch Klammern gegeneinander vorgespannt sind. Diese Ausgestaltung ist jedoch relativ aufwendig im Aufbau und benötigt darüber hinaus relativ viel zusätzlichen Bauraum.

Aus der FR-PS 2 360 028 ist eine Vorrichtung zum Verbinden von zwei rohrförmigen Leitungsteilen in der Abgasanlage eines Kraftfahrzeuges bekannt, wobei zwischen die beiden Anschlußstücke eine Spiralfeder gespannt ist, die die beiden Leitungsteile in axialer Richtung auseinander drückt. Mit dieser Anordnung sollen Motorschwingungen abgekoppelt werden, was jedoch dabei nur unzureichend der Vorteil ist.

Weitere aus der Praxis bekannte Verbindungsarten wie beispielsweise verschraubte Flanschverbindungen oder Steckverbindungen, bei denen die Abgasrohre ineinander gesteckt und dann mit einer Schelle verbunden werden, benötigen zur Schwingungsabkopplung spezielle Abkoppelelemente. Diese müssen zusätzlich in die Anlage eingeschweißt oder auf andere Weise mit dieser befestigt werden.

Die bekannten Leitungsverbindungen haben weiterhin den Nachteil, daß sie in ihrer Ausführung aufwendig sind, hohe Kosten verursachen und einen großen Bauraum beanspruchen.

Der vorliegenden Erfindung liegt daher die Aufgabe zugrunde, eine Vorrichtung zum Verbinden von zwei rohrförmigen Leitungsteilen zu schaffen, die in ihrer Ausführung einfach und kostengünstig ist und wenig Bauraum beansprucht.

Erfindungsgemäß wird diese Aufgabe durch die im kennzeichnenden Teil von Anspruch 1 genannten Merkmale gelöst.

Durch die erfindungsgemäße Ausgestaltung der Vorrichtung besteht die Möglichkeit, das Federelement derart über die beiden Endstücke zu führen, daß die beiden Leitungsteile von der Vorspannkraft zusammengehalten werden. Dabei ist von Vorteil, daß der Verbindungsbereich der beiden Leitungsteile sehr klein gehalten werden kann, womit ein nur geringer Bauraum benötigt wird. Darüber hinaus ist das Federelement auf einfache Art und Weise ohne zusätzliche Werkzeuge montierbar.

Die erfindungsgemäße Vorrichtung dient nicht nur zur Verbindung von Rohren, z.B. von Abgasrohren eines Kraftfahrzeuges, sondern auch zur Verbindung eines Abgasrohres mit einem Anschlußstutzen eines Abgasturboladers als ein Leitungsteil.

Vorteilhafte Weiterbildungen und Ausgestaltungen der Erfindung ergeben sich aus den Unteransprüchen und aus den nachfolgend anhand der Zeichnung prinzipmäßig beschriebenen Ausführungsbeispielen.

Es zeigt:
- Fig. 1: die Verbindungsvorrichtung in Seitenansicht;
- Fig. 2: eine Ansicht der Verbindungsvorrichtung von vorne in Prinzipdarstellung gemäß Fig. 1;
- Fig. 3: eine Rückansicht der Verbindungsvorrichtung in Prinzipdarstellung gemäß den Figuren 1 und 2;
- Fig. 4: eine weitere Ausführungsform der Verbindungsvorrichtung in einer Vorderansicht; und
- Fig. 5: eine Seitenansicht der Verbindungsvorrichtung gemäß Fig. 4.

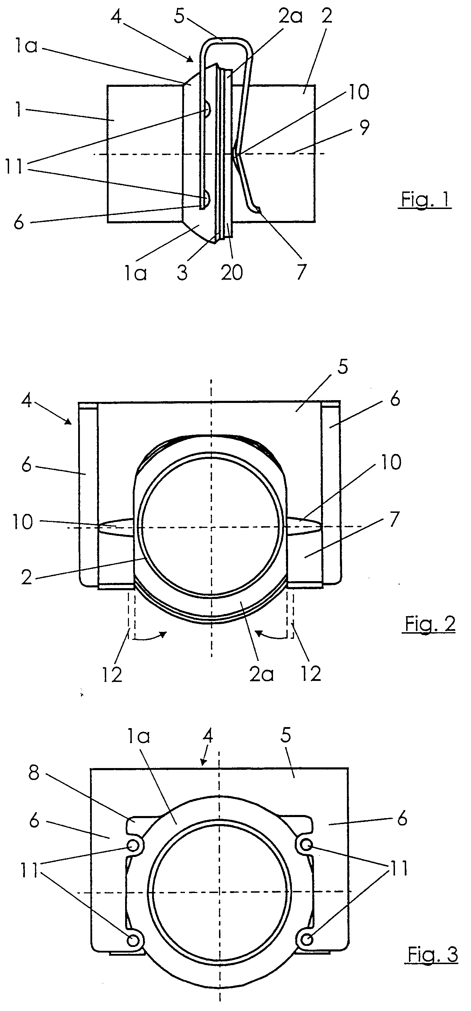

In Fig. 1 ist eine Vorrichtung zum Verbinden von zwei rohrförmigen Leitungsteilen 1, 2 in einer Seitenansicht dargestellt. Dabei weist das Leitungsteil 1 ein kugelabschnittförmiges Endstück 1a und das Leitungsteil 2 ein flanschartiges Endstück 2a auf. Zwischen den beiden Leitungsteilen 1, 2 ist eine Dichtungseinrichtung 3 vorgesehen, welche ein Austreten von Abgasen aus dem Leitungssystem verhindern soll.

Zur Verbindung der beiden Leitungsteile 1, 2 ist als Federeinrichtung ein Federelement 4 mit einem Mittelteil 5 vorgesehen, das sich mit seiner Längsachse rechtwinklig zu den Längsachsen 9 der beiden Leitungsteile 1, 2 über diese erstreckt. Von den sich rechtwinklig zu den Längsachsen der beiden Leitungsteile erstreckenden Querseiten des Mittelteiles 5 gehen jeweils Federäste 6, 7 aus, die sich wenigstens teilweise über den Außenumfang der Leitungsteile 1, 2 erstrecken. Das Mittelteil 5 bildet zusammen mit den beiden Federästen 6, 7 eine U-Form, wobei die Federäste 6, 7 jeweils eine an die Außendurchmesser der Rohrteile 1, 2 bzw. deren Endstücke 1a, 2a angepaßte mittige Aussparungen 8 aufweisen, in welchen die Leitungsteile 1, 2 in montiertem Zustand des Federelementes angeordnet sind.

Das Federelement 4 umfaßt die Endstücke 1a, 2a in axialer Richtung, wobei das unter Vorspannung stehende Federelement 4 die beiden Leitungsteile 1, 2 gegeneinander preßt und somit eine feste Verbindung zwischen diesen herstellt.

Das Federelement, welches als Blattfeder 4 ausgebildet ist, bzw. dessen Federkraft stützt sich dabei auf dem Leitungsteil 2 bzw. dem Endstück 2a über eine Anlagefläche ab, welche aus zwei zylindrischen oder konischen, zu dem anderen Leitungsteil 1 gerichteten Ausformungen 10 gebildet ist. An dem Federast 6, welcher an dem Leitungsteil 1 bzw. dem Endstück 1a anliegt, ist die Anlagefläche durch vier, zu dem anderen Leitungsteil 2 gerichteten kugelabschnittförmige Anformungen 11 gebildet. Die Anformungen 11 bewirken, daß die Blattfeder 4 auf dem Endstück 1a zentriert wird und deren Lage eindeutig definiert ist, da jeweils zwei Anformungen auf einer Seite bzw. sich gegenüberliegend angeordnet sind.

In einer weiteren von dem vorliegenden Ausführungsbeispiel abweichenden Ausführungsform kann es vorgesehen sein, daß die beiden Anformungen 10 als runde Eindrückungen ausgeführt werden, oder daß anstelle der beiden Anformungen drei bzw. vier Anformungen angebracht werden. Falls erforderlich, können auch noch mehr Anformungen angebracht werden, um eine gleichmäßige Kraftverteilung zu erreichen. Damit kann die Blattfeder 4 aus einem flachen Blech hergestellt werden, welches nur durch Verformen die Gestalt der Blattfeder 4 in U-Form erhält.

Die Anformungen 11, welche in dem vorliegenden Ausführungsbeispiel als kugelabschnittartige Anformungen ausgebildet sind, können in einer weiteren nicht dargestellten Ausführungsform zylindrisch oder in einer ähnlich geeigneten Form ausgebildet sein.

Da bei starker Schwingungsbelastung der Leitungsteile 1, 2 die Gefahr besteht, daß die Blattfeder 4 von den Leitungsteilen 1, 2 abrutscht, kann es erforderlich sein, eine Ausrutschsicherung 12 an der Blattfeder 4 vorzusehen. Die Ausrutschsicherung kann durch zwei gegenüberliegende Laschen 12, welche an einem der Federäste 6, 7 angeordnet sind und in Fig. 2 prinzipmäßig dargestellt sind, realisiert werden. Die Laschen 12 sind in vorteilhafter Weise auf der dem Mittelteil 5 abgewandten Seite der Federäste 6, 7 angeordnet und umfassen entweder das Leitungsteil 1 oder das Leitungsteil 2 teilweise auf der dem Mittelteil 5 abgewandten Seite.

Bei der Montage wird die Blattfeder 4 in radialer Richtung über die beiden Leitungsteile 1, 2 aufgeschoben, wobei die beiden seitlichen Laschen 12 über das jeweilige Leitungsteil 1 bzw. 2 gedrückt werden und entsprechend den in Fig. 2 dargestellten Pfeilen jeweils zu den Leitungsteilen 1, 2 hin geklappt bzw. gebogen werden, so daß die Laschen 12 die Leitungsteile 1, 2 teilweise umfassen.

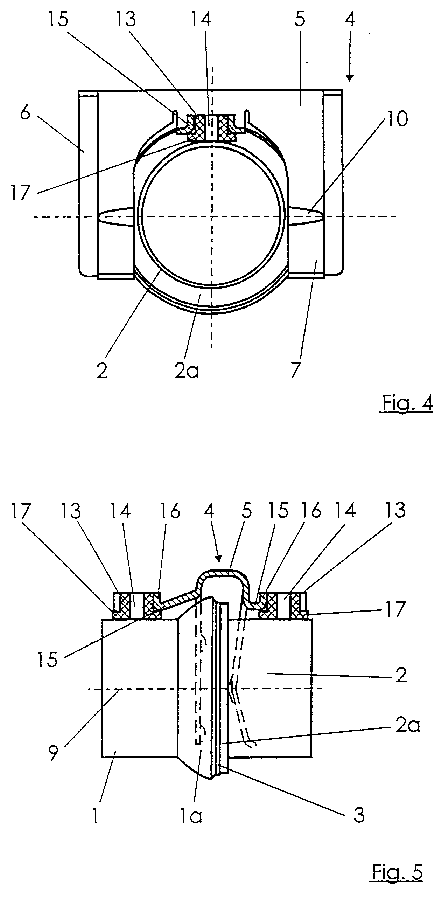

In den Figuren 4 und 5 ist eine weitere Ausführungsform der Verbindungsvorrichtung dargestellt. Dabei ist auf jeder Seite der Blattfeder 4 ein Drahtkissen 13 auf einen Bolzen 14 aufgeschoben, der an den beiden Leitungsteilen 1, 2 befestigt ist. An dem Mittelteil 5 der Blattfeder 4 ist an jeder Querseite eine Lasche 15 herausgestellt, die jeweils mit einem umlaufenden, hochgestellten Bund 16 versehen sind. Durch den Bund 16 wird das Drahtkissen 13 gegen das Leitungsteil 1 gedrückt und damit ein selbständiges Abheben des Drahtkissens 13 von dem Bolzen 14 vermieden.

Durch die Anordnung der Drahtkissen 13 und der Laschen 12 mit dem jeweils daran ausgeformten Bund 16, wird ein Verdrehen der beiden Leitungsteile 1, 2 wirkungsvoll verhindert. Die Laschen 12 wirken auf die Drahtkissen 13 mit einer axialen Kraft, wodurch auf die Drahtkissen 13 eine derartige Klemmwirkung erzielt wird, daß diese nicht von den Bolzen 14 abheben können und die Leitungsteile 1, 2 aufgrund von in der Abgasanlage vorhandenen Torsionsschwingungen nicht mehr zueinander verdreht werden.

Die Drahtkissen 13 stellen ein Feder-Dämpfer-System dar, womit man die Eigenschaften der Verbindung so einstellen kann, daß die in die Karosserie eingeleiteten Schwingungen deutlich reduziert werden.

In dem vorliegenden Ausführungsbeispiel gemäß den Figuren 4 und 5 sind die Drahtkissen 13 rund ausgeführt und weisen einen umlaufenden Rand 17 auf.

In einer von dem vorliegenden Ausführungsbeispiel abweichenden Ausführungsform kann es vorgesehen sein, die Drahtkissen oval auszuführen.

Darüber hinaus liegt es selbstverständlich im Ermessen des Fachmannes die Drahtkissen 13 nicht nur in der dargestellten Art und Weise an den Leitungsteilen 1, 2 vorzusehen, sondern zusätzlich bzw. auch wahlweise an den seitlichen Federästen 6, 7 anzuordnen. Die Lage und Anzahl der eingesetzten Drahtkissen 13 wird durch die Montierbarkeit und die gewünschten Eigenschaften hinsichtlich der Abkopplung der Torsionsschwingungen in der Abgasanlage bestimmt. Da die Drahtkissen 13 mit den Leitungsteilen 1, 2 fest verbunden sind und die Blattfeder 4 über die Laschen 15 die beiden Leitungsteile 1, 2 drehfest miteinander verbindet, ist in einfacher und vorteilhafter Weise gewährleistet, daß mit der Verbindungseinrichtung Torsionsschwingungen abgebaut werden können, ohne daß sich die beiden Leitungsteile 1, 2 gegeneinander verdrehen können.

## Patentansprüche

1. Vorrichtung zum Verbinden von zwei rohrförmigen Leitungsteilen, insbesondere von Leitungsteilen in einer Abgasanlage eines Kraftfahrzeuges, wobei zwischen den Leitungsteilen eine Dichtungseinrichtung angeordnet ist und die Leitungsteile an ihren Enden jeweils ein flanschartiges Endstück aufweisen, und wobei die Leitungsteile von einer Federeinrichtung, die ein sich rechtwinkelig zur Längsachse der Leitungsteile erstreckendes Mittelteil aufweist, mit einer Vorspannkraft zusammengehalten sind,
**dadurch gekennzeichnet,** daß
die Federeinrichtung ein Federelement (4) aufweist, von dessen sich rechtwinkelig zu den Längsachsen (9) der Leitungsteile (1,2) erstreckenden Querseiten des Mittelteiles (5) aus Federäste (6,7) unter Bildung einer wenigstens annähernden U-Form sich wenigstens teilweise über den Außenumfang der Leitungsteile (1,2) erstrecken, wobei die Federäste (6,7) jeweils eine an die Außendurchmesser der Leitungsteile (1,2) angepaßte mittige Aussparung (8) aufweisen, in welcher jeweils ein Leitungsteil (1,2) im montierten Zustand des Federelementes (4) aufgenommen ist.

2. Vorrichtung nach Anspruch 1,
**dadurch gekennzeichnet**, daß
die Federäste (6,7) Anlageflächen zur Anlage an den Endstücken (1a,2a) aufweisen.

3. Vorrichtung nach Anspruch 2,
**dadurch gekennzeichnet**, daß
die Anlagefläche aus wenigstens zwei sich verjüngenden zylindrischen Ausformungen (10) gebildet ist.

4. Vorrichtung nach Anspruch 2,
**dadurch gekennzeichnet**, daß
die Anlagefläche aus wenigstens zwei halbkugelförmigen Anformungen (11) gebildet ist.

5. Vorrichtung nach einem der Ansprüche 1 bis 4 ,
**dadurch gekennzeichnet**, daß
an dem Federelement (4) eine Ausrutschsicherung (12) vorgesehen ist, welche die Endstücke (1a,2a) auf der dem Mittelteil (5) abgewandten Seite wenigstens teilweise umfaßt.

6. Vorrichtung nach Anspruch 5,
**dadurch gekennzeichnet**, daß
die Ausrutschsicherung umbiegbare Laschen (12) aufweist, welche jeweils an einem Federast (6,7) auf der dem Mittelteil (5) abgewandten Seite vorgesehen sind.

7. Vorrichtung nach einem der Ansprüche 1 bis 6,
**dadurch gekennzeichnet**, daß
an den Leitungsteilen (1,2) jeweils wenigstens ein Drahtkissen (13) auf einem jeweils mit den Leitungsteilen (1,2) fest verbundenen Bolzen (14) geschoben ist, wobei an dem Mittelteil (5) des Federelementes (4) wenigstens eine Lasche (15) vorgesehen ist, welche in montiertem Zustand des Federelementes (4) derart auf dem Drahtkissen (13) aufliegt, daß die beiden Leitungsteile (1,2) drehfest miteinander verbunden sind.

8. Vorrichtung nach Anspruch 9 oder 10,
**dadurch gekennzeichnet,** daß
das Drahtkissen (13) wenigstens annähernd rund ausgeführt ist und einen umlaufenden Rand (17) aufweist.
